# EUROPÄISCHE PATENTSCHRIFT

(11) **EP 1 531 242 B1**
(45) Veröffentlichungstag und Bekanntmachung des Hinweises auf die Patenterteilung: **19.09.2007**
(21) Anmeldenummer: 04023141.7
(22) Anmeldetag: 29.09.2004
(51) Int. Cl.: F01N 7/18

(54) **Entkoppelelement für Abgasanlagen**
Decoupling element for exhaust systems
Elément de découplage pour systèmes d'échappement

(30) Priorität: 13.11.2003 DE 20317596 U
(43) Veröffentlichungstag der Anmeldung: 18.05.2005
(73) Patentinhaber: Witzenmann GmbH, 75175 Pforzheim (DE)
(72) Erfinder: Barthold, Jens, 75175 Pforzheim (DE); Fleck, Stefan, 75239 Eisingen (DE); Friocourt, Laurent, 71332 Waiblingen (DE); Gukelberger, Marc, 76275 Ettlingen (DE); Heil, Bernhard, 76307 Karlsbad (DE); Mauch, Stefan, 75305 Neuenbürg (DE); Merkowski, Eduard, 75181 Pforzheim (DE)
(74) Vertreter: Blumenröhr, Dietrich

(56) Entgegenhaltungen:
- DE-U1- 20 207 262
- US-B1- 6 324 837

## Beschreibung

Die Erfindung betrifft ein Entkoppelelement für Abgasanlagen, bestehend aus einem flexiblen Metallschlauch mit hohlzylindrischem Anschlussende, wobei das Anschlussende mit einem Ringelement verbunden ist, welches eine Trennstelle für die Abgasanlage bildet, indem es eine radial vorstehende Schulter aufweist, an der mittels eines die Schulter formschlüssig umgreifenden Halteelements ein anzuschließender benachbarter Leitungsabschnitt in lösbarer Weise festlegbar ist, wobei das Ringelement auf seiner radialen Außenseite zwei umlaufende geneigt und/oder gewölbt zur Mittelachse des Entkoppelelements verlaufende und insbesondere konische Flanken aufweist und wobei die radial vorstehende Schulter des Ringelements aus dem umlaufenden Scheitelbereich besteht, den die beiden Flanken zwischen sich bilden.

In der Vergangenheit wurde dazu übergegangen, Abgasanlagen mit Trennstellen zu versehen, durch die bei Ausfall eines Bauteils nicht die gesamte Abgasanlage.ausgebaut und bearbeitet werden muss und die es erlaubt, einzelne Komponenten ohne großen Montageaufwand aus der gesamten Abgasanlage insbesondere zu Reparaturzwecken herauszulösen. Solche Trennstellen befinden sich beispielsweise benachbart zu Entkoppelelementen, die vorgesehen sind, um vom Motor verursachte und auf die Abgasanlage übertragene Schwingungen von den stromabwärts angeordneten Anlagenbereichen fernzuhalten.

Eine Trennstelle wird im Stand der Technik dadurch gebildet, dass ein Ringelement mit doppel-konischer Außenform und glatt zylindrischer Innenform vorgesehen ist, welches beispielsweise als Widerlager für einen benachbarten Leitungsabschnitt dient. Der benachbarte Leitungsabschnitt kann mit einem konisch aufgetulpten Ende unter flächiger Anlage an dem Ringelement über ein Halteelement wie etwa eine Rohr- oder Spannschelle oder dergleichen in lösbarer Weise festgelegt werden. Soll nun die Abgasanlage im Bereich der Trennstelle geteilt werden, so kann dies in einfacher Weise durch Lösen des Halteelements erfolgen.

Das doppel-konische Ringelement mit der radial vorstehenden Schulter wird im Stand der Technik aus einem massiven geschmiedeten Drehteil hergestellt, welches ausreichend stabil ist, um zusammen mit dem Halteelement den benachbarten Leitungsabschnitt dauerhaft und schall- sowie mediendicht festlegen zu können. Dieses Ringelement stützt sich hierbei über die zylindrische Innenfläche an dem hohlzylindrischen Anschlussende ab.

Daneben ist im Stand der Technik aus der DE-U 202 07 262 ein gattungsgemäßes Entkoppelelement bekannt, das den beschriebenen Nachteil des massiven Ringelements vermeidet, indem das Ringelement mit zumindest in etwa gleich bleibender Wandstärke im Flanken- und Scheitelbereich und auf seiner radialen Innenseite hohl ausgeführt ist. Der Vorteil des bekannten Entkoppelelements mit dünnwandigem Ringelement liegt darin, dass das Ringelement weitaus weniger massiv und damit einfacher und kostengünstiger hergestellt und mit leichterem Gewicht ausgeführt sein kann. Damit das bekannte Ringelement mit reduziertem Materialquerschnitt immer noch eine ausreichende Abstützung am Entkoppelelement erhält, ist das Ringelement zur dauerhaften Festlegung mit einer der beiden Flanken durch eine Schweißverbindung am Entkoppelelement festgelegt, wohingegen die andere Flanke in Axialrichtung formschlüssig durch einen radial vorstehenden Bord einer Endhülse gehalten wird, die auf der radialen Außenseite des hohlzylindrischen Anschlussendes des Entkoppelelementes angeordnet ist. Während die Schweißverbindung im Bereich derjenigen Flanke, die vom Entkoppelelement abgewandt ist, auch beim massiven Ringelement vorgesehen war, sorgt die Abstützung an der bei derartigen Entkoppelelementen üblichen Endhülse dafür, dass sich die beiden Flanken des bekannten Ringelements bei zu großer Belastung nicht in Axialrichtung aufspreizen und somit trotz der Materialreduzierung ein ebenso stabiles Widerlager für den angrenzenden und an der Trennstelle anzuschließenden benachbarten Leitungsabschnitt bilden.

Hiervon ausgehend liegt nun der vorliegenden Erfindung die Aufgabe zugrunde, das Entkoppelelement der eingangs genannten Art weiter zu entwickeln und ein gattungsgemäßes Entkoppelelement anzubieten, das für die Anbindung unterschiedlichster benachbarter Leitungsabschnitte geeignet ist und darüber hinaus aber auch die Herstellungskosten des Entkoppelelements reduziert.

Diese Aufgabe wird erfindungsgemäß dadurch gelöst, dass das Ringelement zumindest teilweise axial versetzt zum Entkoppelelement angeordnet ist derart, dass das Ringelement im Bereich der dem Entkoppelelement zugewandten Flanke zumindest mittelbar am Anschlussende des Entkoppelelements festgelegt ist und dass die dem Entkoppelelement abgewandte Flanke gegenüber dem Anschlussende des Entkoppelelements in Axialrichtung vorsteht und dass die dem Entkoppelelement zugewandte Flanke einen zylindrischen Axialfortsatz aufweist, der das Anschlussende des Entkoppelelements überlappt und zur Festlegung des Ringelements am Anschlussende des Entkoppelelements dient.

Hierdurch ergibt sich der Vorteil, dass das Anschlussende (das ja beim bekannten dünnwandigen Entkoppelelement zur Festlegung beider Flanken diente, indem die eine Flanke des Ringelements mit dem Anschlussende verschweißt und die andere Flanke des Ringelements an der Endhülse des Entkoppelelements abgestützt wurde und deshalb mindestens so lang ausgeführt werden musste, wie es der axialen Länge des Ringelements entspricht) nunmehr einen Bruchteil der axialen Länge des Ringelements aufweisen kann und somit die Herstellungskosten des zugehörigen Entkoppelelements deutlich reduziert werden. Hierbei wird nur noch die dem Entkoppelelement zugewandte Flanke des Ringelements am Entkoppelelement bzw. an dessen Anschlussende insbesondere durch Schweißen festgelegt, während die andere Flanke in Axialrichtung gegenüber dem Entkoppelelement vorsteht. Die dadurch mögliche Verkürzung des Anschlussendes führt dazu, dass wieder standardmäßige Entkoppelelemente zusammen mit dem doppelkonischen Ringelement verwendet werden können und keine teueren Sonderausführungsformen mit verlängertem Anschlussende benötigt werden.

Was den zylindrischen Fortsatz des Ringelements betrifft, so kann der in nahezu beliebiger Variantenvielfalt ausgeführt sein: So kann der zylindrische Fortsatz sich beispielsweise auf der radialen Außenseite des Anschlussendes oder auf dessen radialer Innenseite erstrecken; der Fortsatz kann die üblicherweise bei dem Entkoppelelement zur Festlegung eines Geflechts- oder Gestrickeschlauchs verwendete Endhülse ersetzen bzw. einstückig mit dieser Endhülse ausgebildet sein; der Fortsatz kann sich über nahezu die gesamte axiale Länge des Anschlussendes erstrecken oder nur über einen Teilbereich hiervon und/oder der Fortsatz kann mit einem auf seiner radialen Innenseite angeordneten Flammrohr zusammenwirken, das den Hohlraum des Ringelements gegenüber dem Leitungsinneren bzw. dem durch die Leitung zu transportierenden Medium abschirmt und insbesondere hülsenartig ausgebildet ist.

Der wesentliche Vorteil der vorliegenden Erfindung ergibt sich aber vor allem dadurch, dass die dem Entkoppelelement abgewandte Flanke des Ringelements ganz ohne Abstimmung mit dem Entkoppelelement selbst ausgebildet sein und insbesondere an ihrem freien radial inneren Ende einen beliebigen Innendurchmesser aufweisen kann, welcher zweckmäßigerweise in Anpassung an den hieran festzulegenden benachbarten Leitungsabschnitt ausgewählt ist. Während also bisher der Innendurchmesser beider Flanken durch den Außendurchmesser des Anschlusselements festgelegt war und demgemäß der anzuschließende benachbarte Leitungsabschnitt hieran angepasst werden musste, ist durch das erfindungsgemäße Ringelement nun gleichzeitig ein Übergangs- bzw. Kopplungsstück geschaffen, das zu nahezu beliebigen Leitungsquerschnittsänderung verwendet werden kann, um eine optimale Festlegung des benachbarten Leitungsabschnitts dadurch zu ermöglichen, dass die dem Entkoppelelement abgewandte Flanke des Ringelements an den Querschnitt des anzuschließenden Leitungsabschnittes angepasst ist.

Was die dem Entkoppelelement abgewandte Flanke des Ringelements betrifft, so kann diese ebenfalls eine Axialfortsatz aufweisen, der zur Stabilisierung des Ringelements dient und auch dazu verwendet werden kann, einerseits den anzuschließenden Leitungsabschnitt beim Montieren zu führen und andererseits den flächigen Anlagebereich an dem Ringelement zu vergrößern.

Die bevorzugte konische Form der Flanken bedeutet, dass diese im Längsschnitt einen geradlinigen Verlauf aufweisen mit einer zur Mittelachse des Entkoppelelements geneigten Steigung. Aber ebenso sind natürlich auch andere Flankenformen möglich, um das Ende des benachbarten anzuschließenden Leitungsabschnittes unter Zuhilfenahme einer Schelle oder eines ähnlichen Befestigungsmittels festzulegen.

Somit erhält man nicht nur eine kostengünstige Anbindung, sondern durch die Materialreduzierung eine entsprechend erhebliche Gewichtsersparnis. Darüber hinaus ist es möglich, das Entkoppelelement bestückt mit dem Ringelement und somit komplett vormontiert zum Abgasanlagenhersteller zu liefern, der lediglich noch den benachbarten Leitungsabschnitt über ein geeignetes Halteelement, also beispielsweise eine Rohrschelle an dem Entkoppelelement festlegen muss.

Ein übliches Entkoppelelement, wie es bei den Abgasanlagen von Kraftfahrzeugen verwendet wird, besteht aus einem durch einen gewickelten Metallschlauch hergestellten inneren Liner, einem auf dessen radialer Außenseite angeordneten und aus einem gewellten Metallschlauch bestehenden Balg und aus einem wiederum auf dessen radialer Außenseite angeordneten Geflechts- und/oder Gestrickeschlauch. Im Bereich des Anschlussendes sind Liner, Balg und Geflechts- oder Gestrickeschlauch zylindrisch ausgebildet und liegen aneinander an, wobei die Endhülse auf den Geflechts- oder Gestrickeschlauch im Bereich des Anschlussendes aufgesteckt und dort festgelegt ist. Das Ringelement, welches später in der Abgasanlage die Trennstelle bildet, ist schließlich auf dieses Anschlussende aufgesteckt und am Anschlussende festgelegt. Natürlich sind auch andere Bauformen für das Entkoppelelement möglich, die vorstehend geschilderte Ausführungsform stellt lediglich ein Veranschaulichungsbeispiel dar.

Weitere Merkmale und Vorteile der vorliegenden Erfindung ergeben sich aus der nachfolgenden Beschreibung von Ausführungsbeispielen anhand der Zeichnung; hierbei zeigen
- Figur 1: ein erfindungsgemäßes Entkoppelelement 1 in teilweise geschnittener Seitenansicht;
- Figur 2: eine alternative Ausführungsform eines erfindungsgemäßen Entkoppelelements in teilweise geschnittener Seitenansicht; und
- Figuren 3 bis 6: weitere alternative Ausführungsformen in schematisch geschnittener Seitenansicht.

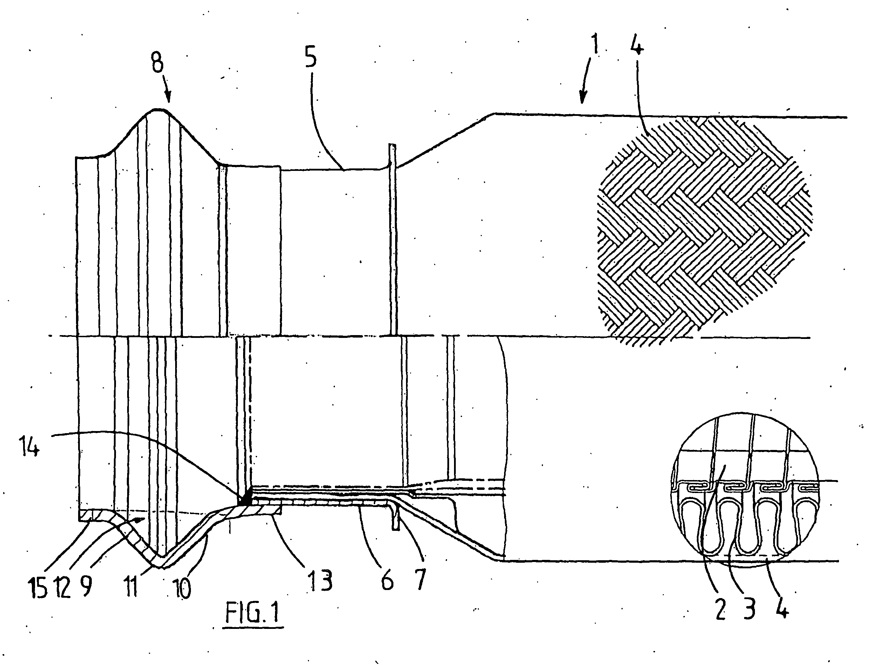

In Figur 1 ist ein Entkoppelelement 1 dargestellt, welches aus einem einen inneren Liner 2 bildenden gewickelten Metallschlauch, einem auf dessen radialer Außenseite beabstandet angeordneten und aus einem gewellten Metallschlauch gebildeten Balg 3 und schließlich einem koaxial auf der Außenseite des Balgs diesen im Bereich seiner Wellenkrempen beaufschlagenden Geflechtsschlauch 4 besteht. Das Entkoppelelement 1 weist an einem axialen Ende ein Anschlussende 5 auf, in dessen Bereich der innere Liner 2, der mittlere Balg 3 und der äußere Geflechtsschlauch 4 auf eine zylindrische Form und in gegenseitige Anlage gebracht sind. Im Bereich dieses Anschlussendes 5 ist eine hohlzylindrische Endhülse 6 mit einem radial vorstehenden Bund 7 angeordnet und auf den zylindrischen Abschnitt des Geflechtsschlauchs 4 aufgesteckt, so dass sich der zylindrische Abschnitt der Endhülse in flächiger Anlage an dem Geflechtsschlauch 4 erstreckt und somit parallel zu Geflechtsschlauch, Balgende und Linerende angeordnet ist.

Auf der radialen Außenseite der Endhülse 6 ist schließlich ein Ringelement 8 vorgesehen, welches zwei konische Flanken 9, 10 sowie im zwischen den beiden Flanken gebildeten umlaufenden Scheitelbereich eine Schulter 11 aufweist. Das Ringelement 8 ist im Bereich der Flanken und des Scheitels mit etwa gleichbleibender Wandstärke und damit auf seiner radialen Innenseite hohl mit einem Hohlraum 12 ausgebildet und liegt demgemäss lediglich mit der Flanke 10 an der Endhülse an, wobei die Flanke 10 über eine Schweißverbindung 13 an der Endhülse, dem Geflechtsschlauch, dem Balg und dem inneren Liner festgelegt ist, wie es nachfolgend näher beschrieben ist.

Die durch das Ringelement 8 gebildete Trennstelle funktioniert dabei in der an sich bekannten Art und Weise derart, dass an die dem (nicht dargestellten) benachbarten Leitungsabschnitt zugewandte Flanke 9 das aufgetulpte Ende dieses Leitungsabschnittes angefügt wird und von diesem aufgetulpten Ende ausgehend eine (ebenfalls nicht dargestellte) Rohrschelle die Schulter 11 übergreifend angeordnet ist, die sich bis auf die andere Seite des Ringelements bis an die Flanke 10 erstreckt und so das Ringelement formschlüssig und in Axialrichtung unverschieblich umgreift.

Die zuvor erwähnte Schweißverbindung zwischen Ringelement 8 und Anschlussende 5 des Entkoppelelements 1 ist so ausgebildet, dass die dem Entkoppelelement 1 zugewandte Flanke 10 des Ringelements einen zylindrischen Axialfortsatz 13 aufweist, der das Anschlussende 5 auf seiner radialen Außenseite überlappt und in dessen Bereich eine Schweißverbindung 14 angebracht ist, die das Anschlussende 5 mit dem Axialfortsatz 13 dauerhaft verbindet. Demgegenüber ist die dem Entkoppelelement 1 abgewandten Flanke 9 nicht mit dem Anschlussende 5 verbunden, vielmehr steht sie in Axialrichtung gegenüber dem Anschlussende 5 vor und kann - wie es in Figur 1 gezeigt ist - zur Stabilisierung ebenfalls einen zylindrischen Axialfortsatz 15 aufweisen, der zum einen das Aufstecken des angrenzenden anzuschließenden Leitungsabschnittes auf seiner radialen Außenseite vereinfacht und zum anderen auch die flächigen Anlagebereiche zwischen Leitungsabschnitt und Ringelement vergrößert.

Nachdem die dem Entkoppelelement 1 abgewandte Flanke 9 keine direkte Verbindung mit dem Anschlussende 5 des Entkoppelelements 1 mehr aufweist, ist der Innenquerschnitt der Flanke 9 und insbesondere des Axialfortsatzes 15 frei wählbar und kann an den Querschnitt des benachbarten anzuschließenden Leitungsabschnittes angepasst werden.

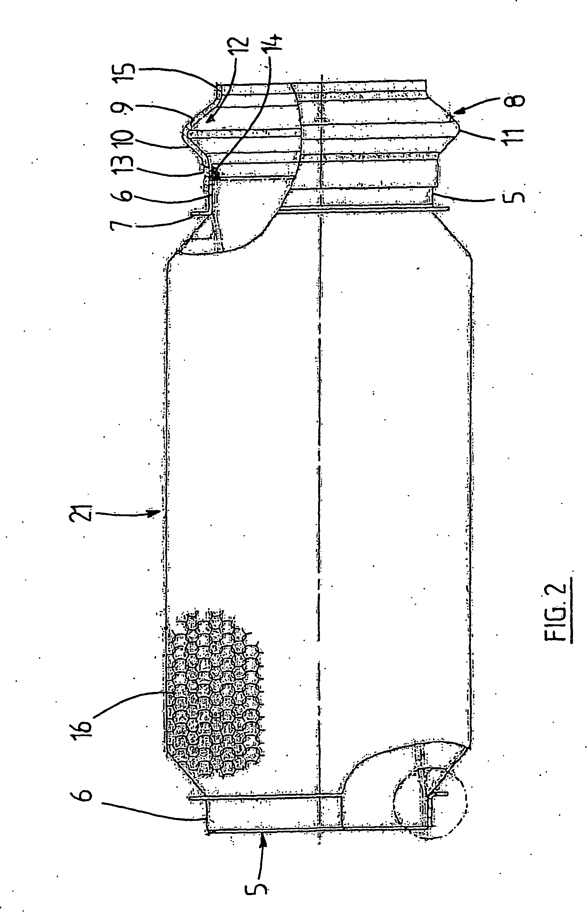

So ist bei der in Figur 2 dargestellten Ausführungsform eines Entkoppelelements 21, bei der gleiche Bauteile mit gleichen Bezugszeichen versehen sind, der Axialfortsatz 15 der abgewandten Flanke 9 in Radialrichtung weiter nach innen hin zu einem kleineren Querschnitt - verglichen mit dem Axialfortsatz 13 der dem Entkoppelelement 21 zugewandten Flanke 10 - versehen und kann dadurch zum Festlegen eines benachbarten anzuschließenden Leitungsabschnittes mit gegenüber der Bauform aus Figur 1 reduziertem Innenquerschnitt verwendet werden und damit allgemein zur Überbrückung bzw. Anpassung des Entkoppelelements an die jeweiligen individuellen möglichen Querschnitte der anzuschließenden Leitungsabschnitte. Bei den bekannten Bauformen, bei denen sich beide Flanken am Anschlussende des Entkoppelelements abstützten und so von dem Querschnitt des Anschlussendes abhängig waren, konnten nur Leitungsabschnitte angefügt werden mit einem ganz bestimmten Leitungsquerschnitt, so dass bei vorgegebener Entkoppelelementgröße unter Umstände die angrenzenden Leitungsabschnitte hinsichtlich ihres Durchmesser anzupassen waren.

Bei der Entkoppelelement-Bauform aus Figur 2 liegt neben dem geänderten Querschnitt der abgewandten Flanke 10 bzw. des Axialfortsatzes 15 ein Unterschied gegenüber der Bauform aus Figur 1 darin, dass der Metallbalg 3 auf seiner radialen Außenseite nicht von einem Geflechtsschlauch 4, sondern von einem Gestrickeschlauch 16 umgeben ist, weicher über die Endhülsen 6 im Bereich der Anschlussenden 5 festgelegt ist.

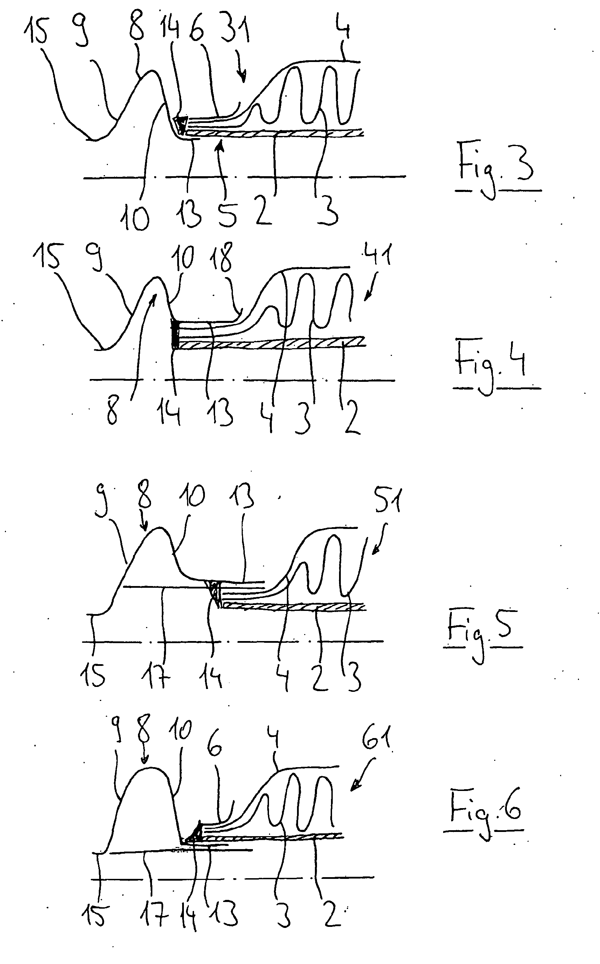

Bei der in Figur 3 dargestellten Ausführungsform eines Entkoppelelementes 31 ist das Ringelement 8 über die Flanke 10 bzw. den zugehörigen Axialfortsatz 13 auf der radialen Innenseite des Anschlussendes 5 des Entkoppelelements 31 festgelegt, während bei den Ausführungsformen aus den Figuren 1 und 2 die Festlegung jeweils auf der radialen Außenseite des Anschlussendes erfolgte. Diese Bauform aus Figur 3 zeigt auch, wie das Anspruchsmerkmal des Überlappens des Anschlussendes durch den Axialfortsatz des Ringelements zu verstehen ist: Das Überlappen bedeutet lediglich, dass sich beide entlang eines gleichen Axialabschnittes parallel zueinander erstrecken, ohne dass hierbei eine Festlegung dahingehend erfolgt, dass das Ringelement auf der radialen Außenseite oder der radialen Innenseite des Anschlussendes angeordnet sein muss.

Bei der Ausführungsform gemäß Figur 4, die ein Entkoppelelement 41 zeigt, ist die üblicherweise vorgesehene Endhülse 6 der Bauformen gemäß der Figuren 1 bis 3 durch den axialen Fortsatz 13 des Ringelements 8 ersetzt; d. h. das Ringelement 8 kann sowohl die Funktion der Endhülse 6 übernehmen als auch in der Form des Axialfortsatzes 13 an übliche Ausführungsformen der Endhülse angepasst sein, indem beispielsweise das freie, dem Entkoppelelement 41 zugewandten Ende des Axialfortsatzes 13 einen in Radialrichtung vorstehenden Bund 18 aufweisen kann, der zur Führung und schonenderen Umlenkung eines äußeren Geflechts- oder Gestrickeschlauches dient. Dieser radial vorstehende Bund kann geneigt zur Achse des Entkoppelelements verlaufen oder auch nach einem Übergangsradius senkrecht zur Achse des Entkoppelelements.

In diesem Zusammenhang sei auch darauf hingewiesen, dass der Axialfortsatz 13 der dem Entkoppelelement zugewandten Flanke 10 nicht nur ausgehend von der Flanke 10 in Richtung des Entkoppelelements verlaufen kann, sondern auch Ausführungsformen denkbar und unter Umständen zweckmäßig sind, bei denen sich der Axialfortsatz in die entgegengesetzte Richtung, also in Richtung der abgewandten Flanke 9 ausgehend von der Flanke 10 erstreckt und hierbei beispielsweise den Hohlraum 12 abschirmt. In diesem Fall könnte der zuvor erwähnte Bund 7 der Endhülse 6 bei Verzicht auf die Endhülse und Ersetzen der Funktion der Endhülse durch das Ringelement sogar durch die Flanke 9 ersetzt werden.

Die erwähnte Abschirmung des Hohlraums 12 kann aber gemäß der Ausführungsformen in den Figuren 5 und 6 auch dadurch erreicht werden, dass das Ringelement 5 bei einem Entkoppelelement 51 bzw. 61 ein zusätzliches Flammrohr 17 auf seiner radialen Innenseite aufweist, das beispielsweise am Axialfortsatz 13 festgelegt und in die Schweißverbindung zwischen Axialfortsatz und Anschlussende mit eingebunden ist. Dieses Flammrohr 17 kann sich einerseits parallel zum Axialfortsatz 13 und anschließend von diesem ausgehend in Richtung der abgewandten Flanke 9 erstrecken und so den Hohlraum 12 vollständig gegenüber dem Leitungsmedium abschirmen. Hierdurch kann man einen direkten Kontakt des Ringelements im Bereich des Hohlraums 12 mit dem Leitungsmedium, also insbesondere mit dem Abgasstrom verhindern, und dabei eine thermische Überbeanspruchung einerseits oder auch Strömungsgeräusche durch Verwirbelungen in dem Hohlraum andererseits vermeiden.

Das Flammrohr 17 kann entsprechend der Ausführungsform aus Figur 5 zusammen mit dem Axialfortsatz 13 auf der radialen Außenseite des Anschlussendes 5 - oder entsprechend Figur 6 auf der radialen Innenseite des Anschlussendes 5 - festgelegt werden. Darüber hinaus kann das Flammrohr gemäß Figur 5 über seine gesamte Länge glattzylindrisch verlaufen oder aber auch gemäß Figur 6 nur in den den Axialfortsatz 13 überlappenden Bereich zylindrisch und im den Hohlraum 12 abschirmenden Bereich bis hin zur Flanke 9 einen konischen Verlauf aufweisen, um einen etwaigen Querschnittsunterschied zwischen Axialfortsatz 13 und Axialfortsatz 15 auszugleichen.

Zusammenfassend liegt ein Vorteil der vorliegenden Erfindung darin, durch geringfügige Abänderung eines an sich bekannten Ringelements und durch gegenüber dem Entkoppelelement versetztes Anordnen des Ringelements die Herstellkosten des Entkoppelelements zu reduzieren; darüber hinaus besteht ein wesentlicher Vorteil darin, nunmehr durch das Ringelement Querschnittsunterschiede zwischen Entkoppelelement einerseits und anzuschließendem Leitungsabschnitt andererseits überbrücken bzw. ausgleichen zu können.

## Patentansprüche

1. Entkoppelelement für Abgasanlagen, bestehend aus einem flexiblen Metallschlauch (2) mit hohlzylindrischem Anschlussende (5), wobei das Anschlussende mit einem Ringelement (8) verbunden ist, welches eine Trennstelle für die Abgasanlage bildet, indem es eine radial vorstehende Schulter (11) aufweist, an der mittels eines die Schulter formschlüssig umgreifenden Haltemittels ein anzuschließender benachbarter Leitungsabschnitt in lösbarer Weise festlegbar ist, wobei das Ringelement auf seiner radialen Außenseite zwei umlaufende geneigt und/oder gewölbt zur Mittelachse des Entkoppelelements angeordnete und insbesondere konische Flanken (9, 10) aufweist, und wobei die radial vorstehende Schulter (11) des Ringelements (8) durch den umlaufenden gemeinsamen Scheitelbereich der zwei Flanken (9, 10) gebildet ist,
**dadurch gekennzeichnet,**
**dass** das Ringelement (8) zumindest teilweise axial versetzt zum Entkoppelelement (1, 21, 31, 41, 51, 61) angeordnet ist, derart, dass das Ringelement im Bereich der dem Entkoppelelement zugewandten Flanke (10) zumindest mittelbar am Anschlussende (5) des Entkoppelelements festgelegt ist und dass die dem Entkoppelelement abgewandte Flanke (9) gegenüber dem Anschlussende des Entkoppelelements in Axialrichtung vorsteht, und dass die dem Entkoppelelement zugewandte Flanke (10) einen zylindrischen Axialfortsatz (13) aufweist, der das Anschlussende (5) des Entkoppelelements überlappt und zur Festlegung des Ringelements (8) am Anschlussende des Entkoppelelements dient.

2. Entkoppelelement nach Anspruch 1,
**dadurch gekennzeichnet,**
**dass** das Ringelement (8) an dem Anschlussende (5) des Entkoppelelements (1) zumindest mittelbar dauerhaft festgelegt ist.

3. Entkoppelelement nach zumindest Anspruch 2,
**dadurch gekennzeichnet,**
**dass** die dem Entkoppelelement (1, 21, 31, 41, 51, 61) zugewandte Flanke (10) des Ringelements (8) durch eine Schweißverbindung (14) am Anschlussende (5) festgelegt ist.

4. Entkoppelelement nach zumindest Anspruch 1,
**dadurch gekennzeichnet,**
**dass** das Ringelement (8) mit zumindest in etwa gleich bleibender Wandstärke im Flanken- und Scheitelbereich (9, 10, 11) und auf seiner radialen Innenseite hohl ausgeführt ist.

5. Entkoppelelement nach zumindest Anspruch 1,
**dadurch gekennzeichnet,**
**dass** das Ringelement (8) auf der radialen Außenseite des Anschlussendes (5) festgelegt ist.

6. Entkoppelelement nach zumindest einem der vorstehenden Ansprüche,
**dadurch gekennzeichnet,**
**dass** das Entkoppelelement (1, 21, 31, 41, 51, 61) einen aus einem gewickelten Metallschlauch hergestellten inneren Liner (2), einen auf dessen radialer Außenseite angeordneten und aus einem gewellten Metallschlauch bestehenden Balg (3) und einen wiederum auf dessen radialer Außenseite angeordneten Geflechts- oder Gestrickeschlauch (4) aufweist.

7. Entkoppelelement nach zumindest Anspruch 6,
**dadurch gekennzeichnet,**
**dass** im Bereich des Anschlussendes (5) Liner (2), Balg (3) und Geflechts- oder Gestrickeschlauch (4) zylindrisch ausgebildet sind und aneinander anliegen.

8. Entkoppelelement nach zumindest einem der vorstehenden Ansprüche,
**dadurch gekennzeichnet,**
**dass** eine Endhülse (6) auf das Entkoppelelement (1, 21, 31, 51, 61) im Bereich des Anschlussendes (5) aufgesteckt und dort festgelegt ist.

9. Entkoppelelement nach zumindest Anspruch 1,
**dadurch gekennzeichnet,**
**dass** das Ringelement (8) auf der radialen Innenseite des Anschlussendes (5) festgelegt ist.

10. Entkoppelelement nach zumindest einem der vorstehenden Ansprüche,
**dadurch gekennzeichnet,**
**dass** das Ringelement (8) auf seiner radialen Innenseite ein Flammrohr (17) aufweist, das sich vom Axialfortsatz (13) in Richtung der abgewandten Flanke (9) erstreckt.

11. Entkoppelelement nach zumindest Anspruch 10,
**dadurch gekennzeichnet,**
**dass** das Flammrohr (17) glattzylindrisch ausgebildet ist.

12. Entkoppelelement nach zumindest Anspruch 10,
**dadurch gekennzeichnet,**
**dass** das Flammrohr (17) zumindest in axialen Teilbereichen konisch ausgebildet ist.

13. Entkoppelelement nach zumindest einem der vorstehenden Ansprüche,
**dadurch gekennzeichnet,**
**dass** die dem Entkoppelelement (1, 21, 31, 41, 51, 61) abgewandte Flanke (9) ebenfalls einen zylindrischen Axialfortsatz (15) aufweist.

14. Entkoppelelement nach zumindest Anspruch 1,
**dadurch gekennzeichnet,**
**dass** sich der axiale Fortsatz (13) der dem Entkoppelelement (51) zugewandten Flanke (10) des Ringelements (8) über den wesentlichen axialen Bereich des Anschlussendes (5) erstreckt und an seinem freien, dem Entkoppelelement (41) zugewandten Ende eine nach radial außen vorstehende bundförmige Abbiegung (18) aufweist.

## Claims

1. Decoupling element for exhaust gas systems, comprising a flexible metal hose (2) with a hollow cylindrical connecting element, wherein the connecting end is connected to a ring element (8) which forms a separation point for the exhaust gas installation as it has a radially projecting shoulder (11) on which an adjacent pipe section to be connected can be fixed in a releasable manner by means of a retaining means engaging by positive locking around the shoulder, wherein the ring element has on its radially outer face two circumferential flanks (9, 10) which are disposed in an inclined and/or curved manner with respect to the central axis of the decoupling element and are in particular conical, and wherein the radially projecting shoulder (11) of the ring element (8) is formed by the circumferential common top region of the two flanks (9, 10), **characterised in that** the ring element (8) is disposed so that it is at least partially offset with respect to the decoupling element (1, 21, 31, 41, 51, 61) in such a way that in the region of the flank (10) facing the decoupling element the ring element is fixed at least indirectly on the connecting end (5) of the decoupling element and that the flank (9) facing away from the decoupling element projects in the axial direction relative to the connecting end of the decoupling element, and that the flank (10) facing the decoupling element has a cylindrical axial extension (13) which overlaps the connecting end (5) of the decoupling element and serves for fixing the ring element (8) on the connecting end of the decoupling element.

2. Decoupling element as claimed in Claim 1, **characterised in that** the ring element (8) is permanently fixed at least indirectly on the connecting end (5) of the decoupling element (1).

3. Decoupling element as claimed in at least Claim 2, **characterised in that** the flank (10) of the ring element (8) facing the decoupling element (1, 21, 31, 41, 51, 61) is fixed on the connecting end (5) by a welded joint (14).

4. Decoupling element as claimed in at least Claim 1, **characterised in that** the ring element (8) is of hollow construction with a wall thickness which is at least approximately constant in the flank and top region (9, 10, 11) and on its radially inner face.

5. Decoupling element as claimed in at least Claim 1, **characterised in that** the ring element (8) is fixed on the radially outer face of the connecting end (5).

6. Decoupling element as claimed in at least one of the preceding claims, **characterised in that** the decoupling element (1, 21, 31, 41, 51, 61) has an inner liner produced from a coiled metal hose, a bellows (3) disposed on the radially outer face thereof and comprising a corrugated metal hose, and a braided or knitted hose (4) again disposed on the radially outer face thereof.

7. Decoupling element as claimed in at least Claim 6, **characterised in that** in the region of the connecting end (5) the liner (2), bellows (3) and braided or knitted hose (4) are of cylindrical construction and rest against one another.

8. Decoupling element as claimed in at least one of the preceding claims, **characterised in that** the end sleeve (6) is fitted onto the decoupling element (1, 21, 31, 41, 51, 61) in the region of the connecting end (5) and is fixed there.

9. Decoupling element as claimed in at least Claim 1, **characterised in that** the ring element (8) is fixed on the radially inner face of the connecting end (5).

10. Decoupling element as claimed in at least one of the preceding claims, **characterised in that** the ring element (8) has on its radially inner face a flue which extends from the axial extension (13) in the direction of the flank (9) facing away from it.

11. Decoupling element as claimed in at least Claim 10, **characterised in that** the flue (17) is of smooth cylindrical construction.

12. Decoupling element as claimed in at least Claim 10, **characterised in that** that the flue (17) is of conical construction at least in axial part-regions.

13. Decoupling element as claimed in at least one of the preceding claims, **characterised in that** the flank (9) facing away from the decoupling element (1, 21, 31, 41, 51, 61) also has a cylindrical axial extension (15).

14. Decoupling element as claimed in at least Claim 1, **characterised in that** the axial extension (13) of the flank (10) of the ring element (8) facing the decoupling element (51) extends over the substantial axial region of the connecting end (5) and has a flange-like bend (18) projecting radially outwards on its free end facing the decoupling element (41).

## Revendications

1. Élément de découplage pour systèmes d'échappement, constitué d'un tuyau métallique flexible (2) doté d'une extrémité de raccordement cylindrique creuse (5), sachant que l'extrémité de raccordement est reliée à un élément annulaire (8) qui constitue un point de séparation pour le système d'échappement, par le fait qu'il présente un épaulement radialement saillant (11) sur lequel un tronçon de conduite voisin à raccorder peut être fixé en position de manière libérable à l'aide d'un moyen de maintien s'engageant positivement autour de l'épaulement, sachant que l'élément annulaire présente sur son côté extérieur radial deux flancs entourants (9, 10) disposés en étant inclinés et/ou cintrés par rapport à l'axe médian de l'élément de découplage et notamment coniques, et sachant que l'épaulement radialement saillant (11) de l'élément annulaire (8) est formé par la région de sommet entourante commune des deux flancs (9, 10),
**caractérisé en ce que** l'élément annulaire (8) est disposé en étant au moins pour partie axialement décalé par rapport à l'élément de découplage (1, 21, 31, 41, 51, 61), de telle sorte que l'élément annulaire est, dans la région du flanc (10) tourné vers l'élément de découplage, fixé en position au moins indirectement sur l'extrémité de raccordement (5) de l'élément de découplage et que le flanc (9) opposé à l'élément de découplage dépasse en direction axiale par rapport à l'extrémité de raccordement de l'élément de découplage, et **en ce que** le flanc (10) tourné vers l'élément de découplage présente un prolongement axial cylindrique (13) qui chevauche l'extrémité de raccordement (5) de l'élément de découplage et sert à la fixation en position de l'élément annulaire (8) sur l'extrémité de raccordement de l'élément de découplage.

2. Élément de découplage selon la revendication 1, **caractérisé en ce que** l'élément annulaire (8) est durablement fixé en position sur l'extrémité de raccordement (5) de l'élément de découplage (1) au moins de manière indirecte.

3. Élément de découplage selon au moins la revendication 2, **caractérisé en ce que** le flanc (10) de l'élément annulaire (8) qui est tourné vers l'élément de découplage (1, 21, 31, 41, 51, 61) est fixé en position sur l'extrémité de raccordement (5) par une liaison soudée (14).

4. Élément de découplage selon au moins la revendication 1, **caractérisé en ce que** l'élément annulaire (8) est réalisé avec une épaisseur de paroi restant au moins approximativement constante dans la région des flancs et du sommet (9, 10, 11), et creux sur son côté intérieur radial.

5. Élément de découplage selon au moins la revendication 1, **caractérisé en ce que** l'élément annulaire (8) est fixé en position sur le côté extérieur radial de l'extrémité de raccordement (5).

6. Élément de découplage selon au moins une des revendications précédentes, **caractérisé en ce que** l'élément de découplage (1, 21, 31, 41, 51, 61) présente une chemise intérieure (2) fabriquée à partir d'un tuyau souple métallique enroulé, un tuyau annelé (3) constitué d'un tuyau souple métallique ondulé et disposé sur le côté extérieur radial de la chemise, et un tuyau souple tressé ou maillé (4) lui-même disposé sur le côté extérieur radial du tuyau annelé.

7. Élément de découplage selon au moins la revendication 6, **caractérisé en ce que**, dans la région de l'extrémité de raccordement (5), la chemise (2), le tuyau annelé (3) et le tuyau souple tressé ou maillé (4) sont réalisés cylindriques et s'appliquent les uns contre les autres.

8. Élément de découplage selon au moins une des revendications précédentes, **caractérisé en ce que** le manchon terminal est emboîté sur l'élément de découplage (1, 21, 31, 51, 61) dans la région de l'extrémité de raccordement (5) et y est fixé en position.

9. Élément de découplage selon au moins la revendication 1, **caractérisé en ce que** l'élément annulaire (8) est fixé en position sur le côté intérieur radial de l'extrémité de raccordement (5).

10. Élément de découplage selon au moins une des revendications précédentes, **caractérisé en ce que** l'élément annulaire (8) présente sur son côté intérieur radial un tube de fumées (17) qui s'étend depuis le prolongement axial (13) en direction du flanc opposé (9).

11. Élément de découplage selon au moins la revendication 10, **caractérisé en ce que** le tube de fumées (17) est réalisé cylindrique et lisse.

12. Élément de découplage selon au moins la revendication 10, **caractérisé en ce que** le tube de fumées (17) est réalisé conique au moins dans des régions partielles axiales.

13. Élément de découplage selon au moins une des revendications précédentes, **caractérisé en ce que** le flanc (9) opposé à l'élément de découplage (1, 21, 31, 41, 51, 61) présente également un prolongement axial cylindrique (15).

14. Élément de découplage selon au moins la revendication 1, **caractérisé en ce que** le prolongement axial (13) du flanc (10) de l'élément annulaire (8) qui est tourné vers l'élément de découplage (51) s'étend sur l'essentiel de la région axiale de l'extrémité de raccordement (5) et présente, à son extrémité libre tournée vers l'élément de découplage (41), une partie recourbée (18) en forme de collet faisant saillie radialement vers l'extérieur.
